# FASCICULE DE BREVET EUROPEEN

(11) **EP 1 304 216 B1**
(45) Date de publication et mention de la délivrance du brevet: **21.12.2005**
(21) Numéro de dépôt: 02292558.0
(22) Date de dépôt: 16.10.2002
(51) Int. Cl.: B32B 7/14, B32B 31/00, B05D 1/28

(54) **Feuille d'emballage comportant deux films contre-collés**
Verpackungsfolie mit zwei geklebten Filmen
Packaging sheet comprising two adhesively bonded films

(30) Priorité: 17.10.2001 FR 0113390
(43) Date de publication de la demande: 23.04.2003
(73) Titulaire: Amcor Flexibles France, 16300 Barbezieux St Hilaire (FR)
(72) Inventeur: Hauchecorne, Jacques, 61160 Chambois (FR)
(74) Mandataire: Blot, Philippe Robert Emile

(56) Documents cités:
- CH-A- 550 070
- DE-A- 4 141 924
- DE-A- 4 320 746
- FR-A- 2 185 666
- US-A- 4 613 538

## Description

La présente invention concerne une feuille d'emballage, du type comportant deux films entre lesquels est interposé un adhésif de liaison.

Il est connu dans le domaine de l'emballage de réaliser des feuilles de polymère complexes par la liaison de deux films de polymère ayant des propriétés distinctes.

Pour assurer la liaison des deux films, lors d'une opération couramment appelée complexage, il est connu de disposer, entre les deux films, une couche continue de colle s'étendant suivant toute la surface des deux films.

Les colles mises en oeuvre sont généralement des colles bi-composant, par exemple polyol-isocyanate comportant initialement un solvant tel que l'acétate. Le solvant doit s'évaporer pour permettre la polymérisation de la colle. Le temps de polymérisation est généralement de 48 heures et il convient de respecter certaines conditions environnementales, notamment de températures et d'hygrométrie pour assurer une polymérisation satisfaisante. En particulier, des contraintes particulières doivent être observées pour éviter les risques de migration des isocyanates au travers des films.

L'invention a pour but de proposer une feuille d'emballage dont la fabrication est plus aisée et notamment moins coûteuse et plus respectueuse de l'environnement.

A cet effet, l'invention a pour objet une feuille d'emballage selon la revendication 1.

Suivant des modes particuliers de réalisation, la feuille d'emballage comporte l'une ou plusieurs des caractéristiques des revendications dépendantes.

L'invention sera mieux comprise à la lecture de la description qui va suivre, donnée uniquement à titre d'exemple et faite en se référant aux dessins sur lesquels :
- la figure 1 est une vue en perspective éclatée d'une feuille d'emballage selon l'invention ;
- la figure 2 est une vue schématique en perspective d'un cylindre de mise en place de la colle d'une installation de fabrication d'une feuille d'invention ;
- la figure 3 est une vue agrandie d'un détail du cylindre de la figure 2 ;
- la figure 4 est une vue en section d'un détail de la figure 3 prise suivant la ligne IV-IV ;
- la figure 5 est une vue en élévation d'une feuille selon l'invention présentant des motifs figuratifs ; et
- Les figures 6A à 6E sont des vues en élévation montrant chacune la répartition des points de colle d'une taille donnée, la superposition des figures 6A à 6E aboutissant à la figure 5.

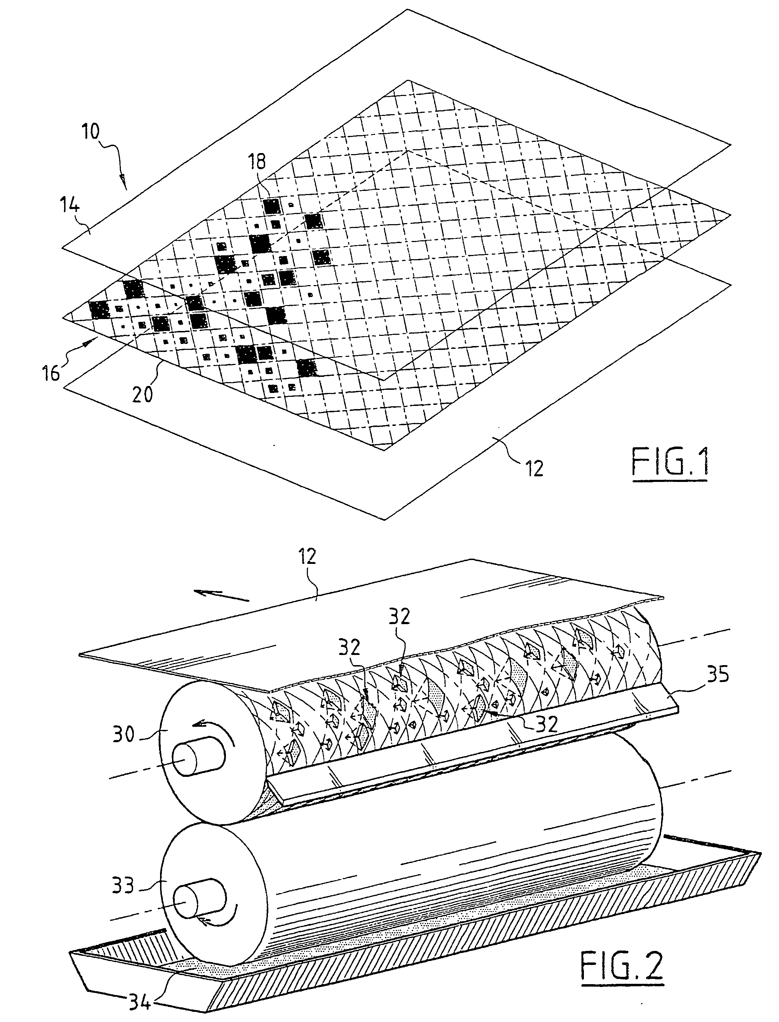

Sur la figure 1 est représentée une feuille d'emballage 10 selon l'invention. Cette feuille est destinée par exemple à la réalisation de sachets d'emballage thermo-scellés. Elle est également adaptée pour constituer un opercule d'obturation d'une barquette.

La feuille 10 comporte deux films de polymère 12, 14 liés l'un à l'autre par une couche discontinue 16 de colle.

Les films 12, 14 sont par exemple, pour l'un, un film de polyamide et, pour l'autre, un film de polyéthylène.

La colle utilisée est par exemple une colle bi-composant à base de solvant, ces deux composants étant un polyol et un isocyanate. Une telle colle est par exemple la colle polyuréthane de la société MORTON Adhésives Europe, (Morton International B.V. , PO Box 32, 3800 AA Amersfoort, The Netherlands) obtenue par mélange des produits commercialisés sous les appellations "Adcote 301A (OH)" et "Adcote 350A (NCO)" en présence d'acétate d'éthyle, l'acétate formant le solvant.

La couche de colle 16 est constituée d'un ensemble de points 18 disposés chacun dans une maille d'un maillage 20 constituant une partition de la surface totale de la feuille. Le maillage 20 est représenté sur la figure 1 pour des raisons de compréhension. Toutefois, celui-ci n'apparaît pas dans la feuille selon l'invention, seuls les points de colle 18 répartis dans les mailles définies par le maillage existant réellement.

Selon l'invention, le maillage 20 comporte au moins quatre cent mailles par centimètre carré. Le nombre de mailles est avantageusement compris entre 900 et 3 600 par centimètre carré. Ce nombre est de préférence compris entre 1 200 et 2 000 par centimètre carré et est par exemple égal à 1 600 par centimètre carré.

Le maillage est de préférence régulier et les mailles sont réparties sous la forme d'une matrice de lignes et de colonnes s'étendant perpendiculairement les unes aux autres. En variante, les lignes et les colonnes sont inclinées d'un angle différent de 90°.

Ainsi, chaque maille présente la forme d'un carré ou d'un losange.

Dans la mesure où le maillage est constitué de lignes et de colonnes entrecroisées de même largeur, celui-ci peut être défini par un nombre de lignes par unité de longueur. Ainsi avantageusement, ce nombre de lignes par centimètre est compris entre 30 et 60 et est avantageusement sensiblement égal à 40.

Chaque maille est emplie ou non d'un point de colle 18. Chaque point de colle couvre une partie seulement de la surface totale de la maille associée ou toute sa surface.

Le taux de couverture d'une maille est défini par le rapport, en pourcent, de la surface couverte par un point de colle sur la surface totale de la maille contenant ce point de colle.

Dans le mode de réalisation illustré sur la figure 1, les points de colle ont des tailles différentes. En particulier, les taux de couverture des mailles sont différents.

De préférence, les taux de couverture des mailles sont choisis pour une feuille dans un même ensemble formé d'un nombre fini de taux de couverture possibles. Le nombre de taux de couverture possibles est compris avantageusement entre 3 et 20. Ces taux de couverture possibles s'échelonnent par exemple par intervalles de 20%, entre 0% et 100%. Ainsi, les mailles peuvent être couvertes de colle à 0%, 20%, 40%, 60%, 80% ou 100%. En pratique, pour un taux de couverture de 100%, l'essentiel de la surface de la maille est recouvert de colle. Seuls les bords, constituant une séparation physique délimitant l'alvéole nécessaire à l'obtention du point de colle sont exempts de colle. En variante, les taux de couverture des mailles sont échelonnés par intervalles de 5%.

Les points de colle sont avantageusement centrés dans chaque maille. Ils présentent une forme de losange. En variante, ils présentent une forme ovoïdale ou tout autre forme.

De préférence, la colle couvre au moins 10% de chaque centimètre carré de la feuille et au plus 90% de la surface totale de la feuille. Avantageusement, la colle couvre entre 15% et 60% de la surface totale de la feuille. Ainsi la densité surfacique de couverture de la feuille par la colle est comprise entre 15% et 60%. Cette densité est définie comme la proportion de la surface encollée de la feuille ramenée à la surface totale de cette même feuille. De manière analogue, une densité surfacique de couverture par la colle peut être définie pour une zone déterminée de la feuille.

Suivant un mode de réalisation particulier, les points de colle ont une même taille sur l'essentiel de la surface de la feuille. La densité surfacique de couverture par la colle est dans ce cas comprise avantageusement entre 15% et 60% et est de préférence sensiblement égale à 30%.

Les plages de la feuille devant être soudées par thermoscellage présentent avantageusement une densité surfacique de colle supérieure au reste de la feuille. Cette densité est par exemple supérieure à 70% et est avantageusement proche de 100%.

Sur la figure 2 est illustrée une installation d'encollage d'un film, par exemple le film 12, avant que celui-ci ne soit mis en contact avec le film complémentaire 14 et que ces deux films soient pressés entre deux rouleaux rotatifs. Cette installation comporte un cylindre 30 présentant un ensemble d'alvéoles 32 répartis suivant un maillage correspondant au maillage escompté pour les points de colle.

Sur la figure 2, la taille des mailles a été considérablement augmentée afin de rendre les alvéoles visibles. Ainsi, la taille des alvéoles est exagérément grande par rapport aux dimensions du cylindre. De plus, le nombre d'alvéoles a été réduit en conséquence.

L'installation comporte en outre un cylindre 33 d'amenée de la colle sur le cylindre 30. Les cylindres 30 et 33 s'étendent tangentiellement. Un bac 34 empli de colle est disposé au dessous du cylindre 33 de sorte que son extrémité inférieure baigne dans la colle. Le cylindre 33 assure un transfert de la colle du bac 34 aux alvéoles 32 du cylindre 30. Une lame formant racloir 35 est appliquée sur la surface du cylindre 30 pour éliminer l'excès de colle à sa surface avant que le cylindre n'entre en contact avec la feuille 12. Le film 12 à encoller est appliqué sur la surface supérieure du cylindre 30 de sorte que par mise en contact, un fin film de colle ponctuel est formé pour chaque alvéole, la surface de ce film ponctuel correspondant à la section ouverte de l'alvéole lui ayant donné naissance.

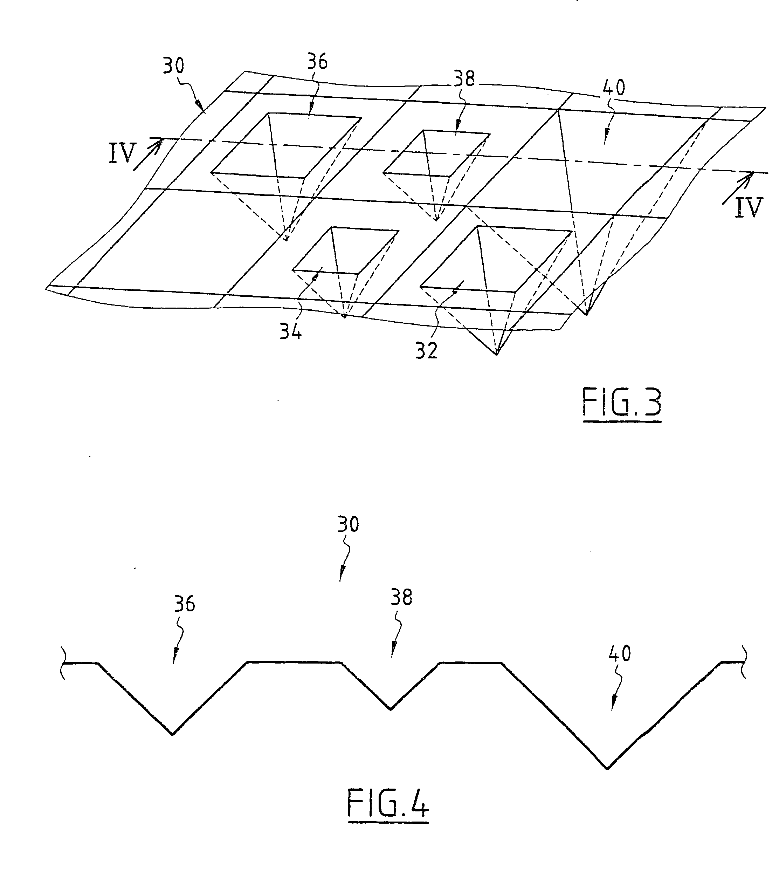

Comme illustré sur les figures 3 et 4, chaque alvéole du cylindre 30 présente une forme pyramidale et est délimité par quatre faces convergentes vers la pointe.

Un tel cylindre est par exemple obtenu par photogravure, les alvéoles étant formés par la pointe d'un outil en diamant pénétrant par impulsions numérisées dans le cylindre en rotation.

En fonction du taux de couverture désiré pour chaque maille, la profondeur de l'alvéole contenu dans la maille est plus ou moins grande. Ainsi, la section de l'alvéole, à son extrémité débouchante, est plus ou moins grande, permettant d'obtenir la surface voulue pour le point de colle.

Dans l'exemple représenté sur les figures 3 et 4, les taux de couverture obtenus pour les alvéoles 36, 38 et 40 sont respectivement de 40%, 20% et 100%. On constate en pratique que l'épaisseur des points de colle obtenus ne dépend pas de la profondeur des alvéoles, mais seulement des propriétés rhéologiques de la colle et de la nature du film de polymère sur lequel la colle est appliquée.

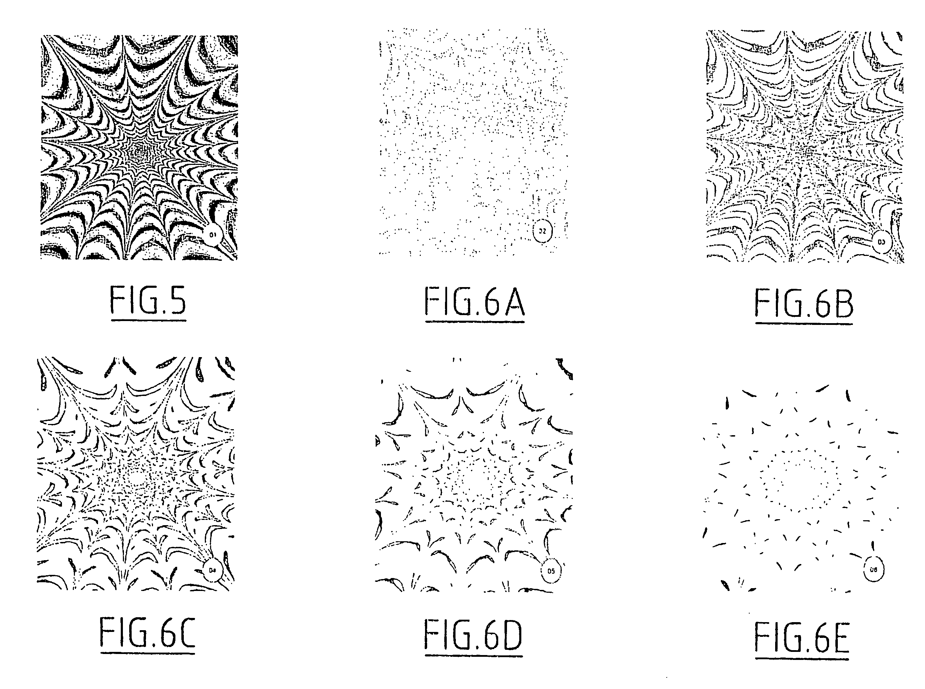

Suivant un mode de réalisation particulier et comme illustré sur la figure 5, l'un des films, par exemple le film 14 est transparent, alors que le film 12 est transparent ou opaque. Les points de colle 18 sont alors visibles au moins au travers du film 14. Dans les régions où la densité surfacique de couverture par la colle est élevée, la colle est plus visible que dans les régions où la densité surfacique de colle est réduite. Ainsi, un contraste est obtenu entre les régions ayant des densités différentes. Des motifs peuvent être ainsi formés directement dans la feuille en fonction de la densité surfacique de couverture par la colle.

Avantageusement, la colle est colorée par exemple par ajout d'un agent colorant dans la colle avant son application sur l'un des films. Cet agent colorant est par exemple un pigment solide, une charge minérale ou un pigment IRIODINE commercialisé par exemple par MERCK, BP 4119, D-6100 DARMSTADT 1, Allemagne.

Dans l'exemple représenté sur la figure 5, la colle est supposée teintée en noir. Ainsi, les régions très sombres des motifs sont formées par des successions de points de colle dont le taux de couverture est élevé et notamment proche de 100%. Les régions du motif apparaissant en gras, sont couvertes d'un ensemble de points de colle dont le taux de couverture est moyen et par exemple compris entre 40% et 60%. Les régions du motif restant claires comportent un nombre de points de colle réduit, ces points ayant eux-mêmes un taux de couverture faible de l'ordre de 20%. Même si certaines régions de l'image sont claires, celles-ci comportent toutefois des points de colle, afin d'assurer la cohésion de la feuille et, notamment la liaison entre les deux films dans ces régions.

Sur les figures 6A à 6E est représentée la répartition sur la surface de la feuille des points de colle de chacune des cinq tailles utilisées pour former l'image de la figure 5.

Les points de colle utilisés pour former des zones grises et figurant sur les figures 6B, 6C et 6D ont des taux de couverture respectivement de 40%, 60% et 80%.

Enfin les points de colle utilisés pour former des zones noires ou très sombres et figurant sur la figure 6E ont un taux de couverture de 100%.

A titre d'exemple, une feuille selon l'invention peut être réalisée à partir d'un film de polyamide (OPA), d'un film de polyéthylène (PE) et d'une colle dont la composition est indiquée dans le tableau ci-dessous.

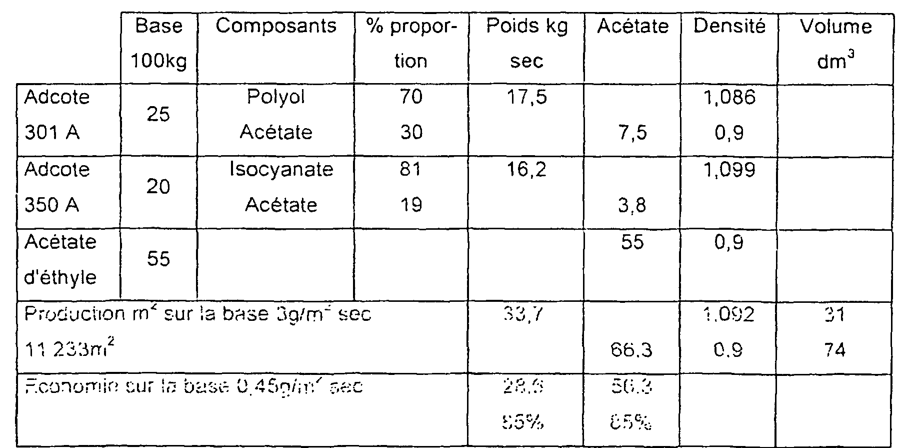

Avec une telle colle, une densité surfacique de couverture uniforme de 15% comme considéré dans l'exemple donné ci-dessus, et 1600 points par cm², la force de retenue des deux films complexés est de 3N pour une éprouvette de 15mm de large.

Avec une feuille selon l'invention, on conçoit que la phase de polymérisation est avantagée par le réseau défini entre les points de colle, ceux-ci étant pour l'essentiel disjoints.

La polymérisation de la colle s'effectue plus vite, assurant ainsi une liaison définitive entre les deux films. Les problèmes rencontrés du fait de la migration potentielle des isocyanates lors du façonnage de la feuille, et notamment lors de la réalisation de soudures alors que la colle ne serait pas complètement sèche sont supprimés.

Par ailleurs, le recours à des points de colle régulièrement repartis sur la surface de la feuille permet de réduire la quantité de colle utilisée, réduisant ainsi le coût de la feuille obtenue.

En variante, les motifs formés sur la feuille sont colorés avec une autre couleur que le noir, en teintant la colle utilisée pour former les points avec une autre couleur.

De même, des motifs polychromes peuvent être obtenus. Pour ce faire, la colle appliquée par points entre les deux films est appliquée à partir de plusieurs cylindres successifs présentant chacun des alvéoles.

Chaque rouleau applique une colle d'une couleur différente et éventuellement d'une nature différente.

Les points de colle appliqués par chaque rouleau peuvent être, comme dans les application d'art graphique, soit traités en complémentation, soit en superposition.

## Revendications

1. Feuille d'emballage (10) comportant deux films (12, 14) entre lesquels est interposée une colle bi-composant à base de solvant (16), **caractérisée en ce que** la colle (16) est répartie selon la surface de la feuille pour former un ensemble de points (18) disposés chacun seul dans une maille d'un maillage (20) constituant une partition de la surface de la feuille, lequel maillage comporte au moins 400 mailles par centimètre carré, la colle couvrant au moins 10% de chaque centimètre carré de la feuille et au plus 90% de la surface totale de la feuille.

2. Feuille d'emballage selon la revendication 1, **caractérisée en ce que** la colle couvre entre 15% et 60% de la surface totale de la feuille.

3. Feuille d'emballage selon l'une quelconque des revendications précédentes, **caractérisée en ce que** le nombre de mailles par centimètre carré est compris entre 900 et 3 600.

4. Feuille d'emballage selon la revendication 3, **caractérisée en ce que** le nombre de mailles par centimètre carré est compris entre 1200 et 2000.

5. Feuille d'emballage selon l'une quelconque des revendication précédente, **caractérisée en ce que** les taux de couverture des différentes mailles sont différents.

6. Feuille d'emballage selon l'une quelconque des revendications précédentes, **caractérisée en ce que** ledit maillage (20) est régulier, chaque maille ayant une surface identique.

7. Feuille d'emballage selon la revendication 6, **caractérisée en ce que** lesdites mailles sont réparties sous forme d'une matrice de lignes et de colonnes.

8. Feuille d'emballage selon la revendication 6 ou 7, **caractérisée en ce que** le taux de couverture de chaque maille est choisi dans un ensemble formé d'un nombre fini de taux de couverture possibles.

9. Feuille d'emballage selon la revendication 8, **caractérisée en ce que** le nombre de taux de couverture possible est compris entre 3 et 20.

10. Feuille d'emballage selon l'une quelconque des revendications précédentes, **caractérisée en ce que** au moins l'un des films (14) est transparent, et **en ce que** la feuille présente des motifs définis par des densités surfaciques de couverture par la colle différents d'une région à l'autre de la feuille.

11. Feuille d'emballage selon la revendication 10, **caractérisée en ce que** la colle est colorée.

12. Feuille d'emballage selon la revendication 11, **caractérisée en ce que** la colle comporte des pigments solides de coloration.

## Patentansprüche

1. Verpackungsfolie (10), welche zwei dünne Schichten (12, 14) umfasst, zwischen denen ein Zweikomponentenkleber auf Lösungsmittelbasis (16) angeordnet ist, **dadurch gekennzeichnet, dass** der Kleber (16) über die Fläche der Folie so verteilt ist, dass er eine Gesamtheit von Punkten (18) bildet, von denen jeder einzeln in einer Masche eines Maschengitters (20) angeordnet ist, welches eine Aufteilung der Oberfläche der Folie bildet, wobei dieses Maschengitter wenigstens 400 Maschen pro Quadratzentimeter umfasst, und der Kleber wenigstens 10 % von jedem Quadratzentimeter der Folie und höchstens 90 % der Gesamtoberfläche der Folie bedeckt.

2. Verpackungsfolie nach Anspruch 1, **dadurch gekennzeichnet, dass** der Kleber zwischen 15 % und 60 % der Gesamtoberfläche der Folie bedeckt.

3. Verpackungsfolie nach einem der vorstehenden Ansprüche, **dadurch gekennzeichnet, dass** die Anzahl der Maschen pro Quadratzentimeter zwischen 900 und 3600 liegt.

4. Verpackungsfolie nach Anspruch 3, **dadurch gekennzeichnet, dass** die Anzahl der Maschen pro Quadratzentimeter zwischen 1200 und 2000 liegt.

5. Verpackungsfolie nach einem der vorstehenden Ansprüche, **dadurch gekennzeichnet, dass** die Abdeckungsquoten der verschiedenen Maschen verschieden sind.

6. Verpackungsfolie nach einem der vorstehenden Ansprüche, **dadurch gekennzeichnet, dass** das Maschengitter (20) regelmäßig ist, wobei jede Masche eine gleiche Oberfläche besitzt.

7. Verpackungsfolie nach Anspruch 6, **dadurch gekennzeichnet, dass** die Maschen in Form einer Matrix aus Reihen und Spalten verteilt sind.

8. Verpackungsfolie nach Anspruch 6 oder 7, **dadurch gekennzeichnet, dass** die Abdeckungsquote von jeder Masche aus einer Menge ausgewählt ist, welche aus einer endlichen Anzahl von möglichen Abdeckungsquoten gebildet ist.

9. Verpackungsfolie nach Anspruch 8, **dadurch gekennzeichnet, dass** die Anzahl möglicher Abdeckungsquoten zwischen 3 und 20 beträgt.

10. Verpackungsfolie nach einem der vorstehenden Ansprüche, **dadurch gekennzeichnet, dass** wenigstens eine der dünnen Schichten (14) durchsichtig ist, und dass die Folie Muster aufweist, die durch Kleberoberflächenabdeckungsdichten festgelegt sind, die sich von einem Bereich der Folie zum anderen unterscheidenden.

11. Verpackungsfolie nach Anspruch 10, **dadurch gekennzeichnet, dass** der Kleber farbig ist.

12. Verpackungsfolie nach Anspruch 11, **dadurch gekennzeichnet, dass** der Kleber feste Farbpigmente umfasst.

## Claims

1. Packaging sheet (10) comprising two films (12, 14) between which there is interposed a solvent-based bi-component adhesive (16), **characterised in that** the adhesive (16) is distributed according to the surface of the sheet in order to form a set of points (18) which are each disposed separately in one mesh of a meshwork (20) forming one division of the surface of the sheet, which meshwork comprises at least 400 meshes per square centimetre, the adhesive covering at least 10% of each square centimetre of the sheet and at most 90% of the total surface of the sheet.

2. Packaging sheet according to claim 1, **characterised in that** the adhesive covers between 15% and 60% of the total surface of the sheet.

3. Packaging sheet according to any of the preceding claims, **characterised in that** the number of meshes per square centimetre is between 900 and 3,600.

4. Packaging sheet according to claim 3, **characterised in that** the number of meshes per square centimetre is between 1200 and 2,000.

5. Packaging sheet according to any of the preceding claims, **characterised in that** the coverage ratios of the various meshes are different.

6. Packaging sheet according to any of the preceding claims, **characterised in that** said meshwork (20) is regular, each mesh having an identical surface area.

7. Packaging sheet according to claim 6, **characterised in that** said meshes are distributed in the form of a matrix with lines and columns.

8. Packaging sheet according to claim 6 or 7, **characterised in that** the coverage ratio of each mesh is chosen from a set formed by a finite number of possible coverage ratios.

9. Packaging sheet according to claim 8, **characterised in that** the number of possible coverage ratios is between 3 and 20.

10. Packaging sheet according to any of the preceding claims, **characterised in that** at least one of the films (14) is transparent, and **in that** the sheet has motifs which are defined by surface densities of coverage by the adhesive which are different from one region of the sheet to another.

11. Packaging sheet according to claim 10, **characterised in that** the adhesive is coloured.

12. Packaging sheet according to claim 11, **characterised in that** the adhesive comprises solid colouration pigments.
